# EUROPEAN PATENT APPLICATION

(11) **EP 2 086 236 A1**
(43) Date of publication of application: **05.08.2009**
(21) Application number: 08300063.8
(22) Date of filing: 31.01.2008
(51) Int. Cl.: H04N 7/18, H04L 29/08

(54) **Method and system for accessing applications**

(71) Applicant: HEWLETT-PACKARD DEVELOPMENT COMPANY, L.P., Houston, TX 77070 (US)
(72) Inventor: Wieczorek, Philippe, 38053 Grenoble Cedex 09 (FR); Stephan, Yann, 38053 Grenoble Cedex 09 (FR); Kowalski, Francois-Xavier, 38053 Grenoble Cedex 09 (FR); Wyld, Brian, 38190 Brignoud (FR)
(74) Representative: Franks, Adam Peter

(57) **Abstract**

According to one aspect of the present invention, there is provided a method for providing access to an application through a user terminal, comprising: executing an application and generating visual application output data; creating video data from the visual application output data, the video data being in a format of the user terminal; and sending the video data to the user terminal through a video channel.

## Description

### Field of the Invention

The present invention relates generally to the field of communications, and particularly to methods and systems for accessing remote applications.

### Background of the Invention

People are increasingly using computer-based interactive applications in evermore aspects of their lives. Such applications provide a vast range of services enabling users to check their bank balances, reserve train tickets, search electronic directories, credit mobile telephone accounts, to name but a few.

There are two main types of interactive application, referred to herein as interactive voice applications, and web-based interactive applications.

Interactive voice applications provide audible information and are accessed through a voice communication channel, typically by placing a telephone call to an interactive voice response unit hosting an interactive voice application.

One of the problems, however, of accessing interactive voice applications through a telephony call is that the nature of the communication channel, i.e. a two-way audio channel, is not well adapted for presenting complex or lengthy information. One of the reasons for this is in the temporary nature of audibly delivered information, which requires a user to memorise the information prior to making a decision based on that information.

Web-based interactive applications, on the other hand, offer primarily visual information, although may be accompanied by audible information. Web-based interactive applications are generally considered better for accessing complex or lengthy information. Web-based interactive applications are typically accessed through a data network, such as the Internet, using a suitably equipped computing device connected to a remote web server hosting a web-based interactive service.

Increasingly, people are accessing interactive applications whilst mobile, via wireless telephony and data networks, through a variety of mobile terminals, including mobile telephones, personal digital assistants, laptop computers, and the like.

Although accessing interactive applications through an Internet browser application on a mobile terminal provides a generally better user experience compared to accessing interactive voice applications through a two-way audio channel, the user experience is often less than ideal. For example, web-based interactive applications are generally written in a mark-up language, such as HTML, xML, or the like, and are accessed through a local rendering application such as an Internet browser application on the mobile terminal. Rendering applications on individual mobile devices often exhibit large differences due, for example, to functional, configuration or performance choices. Accordingly, the application provider has little control over the way in which the rendering application will present the application or even whether the rendering application is capable of presenting the interactive application in a useable manner.

Another significant issue is that the type and resolution of displays on mobile terminals varies significantly between different models of terminals. Thus, a web-based application intended to be displayed on a screen having a resolution of 800 by 600 pixels will need to be resized, under control of the rendering application, for display on a 320 by 240 pixel mobile terminal display. However, due to the complex nature of resizing for different screen resolutions, the results of the resizing may be somewhat unpredictable, as far as the application provider is concerned, and visually unsatisfactory, as far as the user is concerned. These problems may be further exasperated if users override default settings on rendering applications to, for example, increase the size text is displayed, remove images, block adverts, etc.

### Summary of the Invention

Accordingly, one aim of the present invention is to overcome, or at least mitigate, at least some of the problems of the prior art.

According to a first aspect of the present invention, there is provided a method for providing access to an application through a user terminal. The method comprises executing an application and generating visual application output data, creating video data from the visual application output data, the video data being in a format of the user terminal, and sending the video data to the user terminal through a video channel.

According to a second aspect of the present invention, there is provided a system operable in accordance with any of the above-mentioned method steps.

According to a third aspect of the present invention, there is provided a method of accessing an application through a user terminal. The method comprises establishing a video channel with an application, receiving video data from the application and displaying the video data on a display, and selectively sending user inputs to the application through the established video channel to thereby issue control signals to the application.

### Brief Description of the Drawings

Embodiments of the present invention will now be described, by way of nonlimiting example only, with reference to the accompanying drawings, in which:
Figure 1 is a block diagram showing an overview of a system according to the prior art;
Figure 2 is a block diagram of a system 202 according to an embodiment of the present invention;
Figure 3 is a simplified flow diagram showing example processing steps taken by the system 202 according to an embodiment of the present invention;
Figure 4 is a simplified block diagram of a system 402 according to a further embodiment of the present invention; and
Figure 5 is a simplified flow diagram outlining example processing steps taken by the system 402 according to an embodiment of the present invention.

### Detailed Description

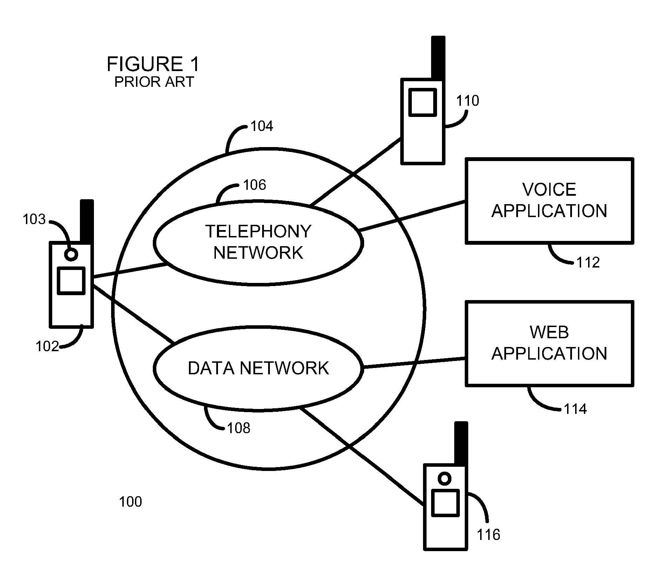

Figure 1 shows an overview of a telecommunication system according to the prior art. A mobile terminal 102, such as a suitable mobile radio telephone, is wirelessly connected to a communications network 104, such as a so-called next generation network or a third generation (3G) network. The network 104 provides access to both a circuit-switched telephony network 106 and a data network 108.

The mobile terminal 102 may be used to place and receive wireless telephone calls in a conventional manner, for example to another telephone terminal 110, through the telephony network 106. The mobile terminal 102 is also equipped with a video camera 103 to enable the user of the mobile terminal 102 to make and receive video calls with other suitably equipped terminals, such as the mobile terminal 116.

A voice application 112 provides interactive voice services to callers. Such interactive voice services may include, for example, banking services, ticket reservation services, weather information services, and the like.

Through the network 104, the user terminal 102 can also to connect, through the data network 108, to a web application 114 providing web-based interactive services, such as banking services, ticket reservation services, weather information services, etc. The web application 114 may be accessed through a suitable application on the terminal 102 such as an Internet browser, a wireless application protocol (WAP) browser, or the like.

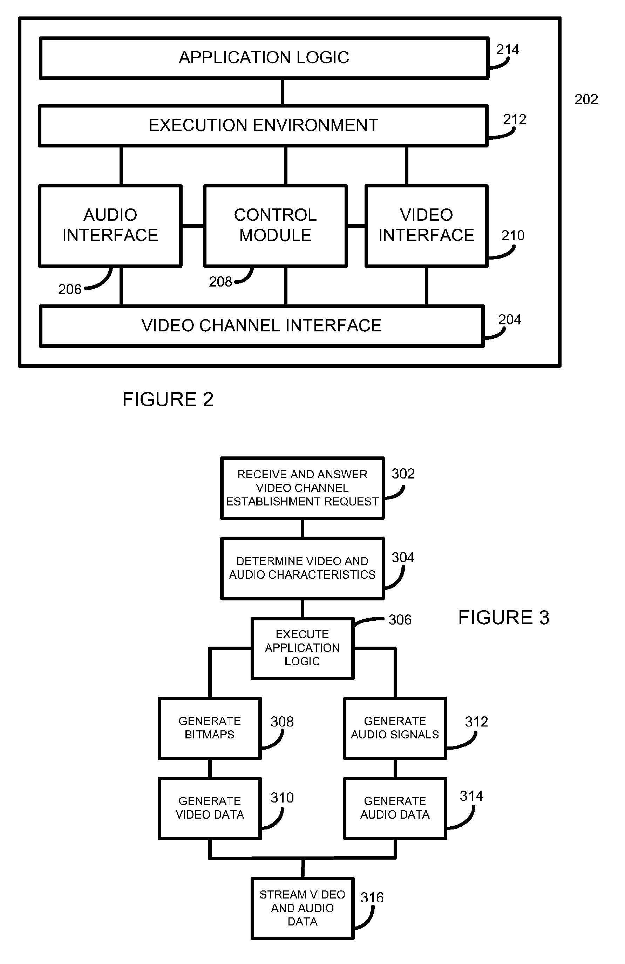

Referring now to Figure 2, there is shown a simplified block diagram of a system 202 according to an embodiment of the present invention that enables a user of a mobile terminal to access an interactive application through a video channel. The system 202 comprises a video channel interface 204, a control module 208, an audio interface 206, a video interface 210, an execution environment 212 and application logic 214. Further reference is now made to Figure 3, which shows a simplified flow diagram showing exemplary processing steps made by the system 202 according to an embodiment of the present invention.

The video channel interface 204 receives and accepts (step 302) a video channel establishment request from the mobile terminal 102. The video channel interface 204 determines (step 304), for example from data received from the mobile terminal 102, characteristics of the video and audio codecs supported by the mobile terminal 102. Additional information may also be received from the mobile terminal relating to the screen resolution of the display screen of the mobile terminal 102. The control module 208 instructs the execution environment 212 to execute (step 306) the application logic 214. The control logic 208 configures the execution environment 212 according to the screen resolution of the mobile terminal 102 so that any sizing or resizing of the graphical output of the execution environment 212 may be suitably adapted for the size of screen on which the output is to be accessed. The execution environment 212 may be any suitable execution environment, including for example, a mark-up language browser for where the application logic is written in a mark-up language, a JAVA virtual machine where the application logic is written in JAVA code, etc. As the execution environment 212 executes the application logic 214, visual application output data, in the form of bitmaps representing the graphical output of the execution environment, are generated (step 308). The video interface 210 converts (step 310) the generated bitmaps into video data suitable for sending to the mobile terminal 102 through the video channel interface 204. The format in which the video data is sent to the mobile terminal 102 is dependant on the video characteristics of the mobile terminal 102 determined at step 304. Any audio signals generated (step 312) as the execution environment 212 executes the application logic 214 are converted (step 314) by the audio interface 206 into audio data suitable for sending to the mobile terminal 102 through the video channel interface 204. The format in which the audio data is sent to the mobile terminal 102 is dependant on the audio characteristics of the mobile terminal 102 determined at step 304. Any generated audio and video data is streamed to the mobile terminal 102 in a suitable video, audio or multimedia stream (step 316) through the established video channel.

To enable the user of the mobile terminal 102 to interact with the application logic 214 the user may cause user inputs to be sent to the video channel interface 204. The user inputs may be, for example, voice commands input through a microphone of the mobile terminal 102, or control commands, such as DTMF tones sent by the user through a user interface of the mobile terminal 102. In an alternative embodiment, the user may use visual gestures, for example sent via the video camera 103 of the mobile terminal 102 to send user commands. Audio user inputs are received at the audio interface 206 and are passed, depending on the execution environment, either to control module 208 for interpretation prior to being input to the execution environment, or directly to the execution environment, to control the execution of the application logic 214. Video-based user inputs, if used, are received at the video interface 210 and are interpreted by the control module 208, prior to being input to the execution environment 212 to control the execution of the application logic 214.

In this way, the user of the mobile terminal 102 is able to see and hear any graphical or audio information generated during the execution of the application logic 214, as well as interacting with the application through user inputs made through the mobile terminal 102.

Such an arrangement brings about numerous advantages. For example, the visual presentation of the application is under the control of the application provider, rather than being under the local control of a local renderer, as is the case in mobile Internet or WAP applications. The visual rendering is therefore consistent and compatible across a wide range of terminals, independent of their configuration or processing capabilities. Furthermore, access to the application 214 is made by simply establishing a video channel with the system 202. Since no mark-up language is sent to the mobile terminal 102, it is not possible for the user of the mobile terminal to intercept proprietary code or information that is used in the description of mark-up language pages. Additionally, since the video data received at the mobile terminal 102 is not cached, but is displayed in real-time, there can be no inadvertent caching of sensitive information, such as banking information, made available whilst accessing to the application 214.

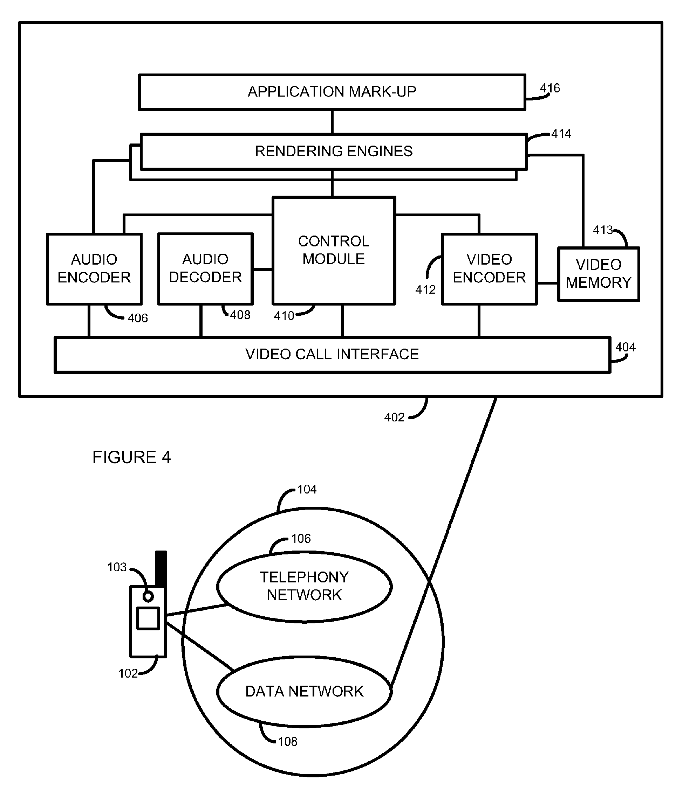

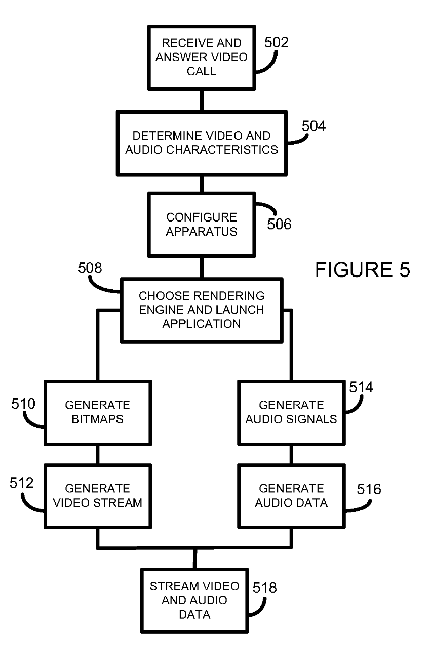

Referring now to Figure 4 is shown a simplified block diagram of a system 402 according to a further embodiment of the present invention. Further reference is made to Figure 5 which is a simplified flow diagram outlining example processing steps taken by the system 402.

A video call interface 404 receives and answers (step 502) an incoming video call establishment request from the mobile terminal 102. In an alternative embodiment the video call interface 402 could initiate a call establishment request with a suitable mobile terminal. The video call interface 404 determines (step 504), for example from data received from the mobile terminal 102, characteristics of the video and audio codecs supported by the mobile terminal 102 during a video call. Additional information may also be received from the mobile terminal 102 relating to the screen resolution of the display screen of the mobile terminal 102. A control module 410 uses the received characteristics to configure an audio encoder 406, an audio decoder 408, a video encoder 412 and one or more rendering engines 414 (step 506). For example, the audio encoder 406 and audio decoder 408 are configured to use an audio codec supported by the mobile terminal 102, and the video encoder 412 is configured to use a video codec supported by the mobile terminal 102. The one or more rendering engines 414 are configured, for example, with the screen resolution of the mobile terminal 102.

In response to the incoming video call being answered, the control module 410 launches an interactive application. The application launched may be dependent, for example, on the telephone number or address used for the incoming video call. The control module 410 launches an application by providing an appropriate one of the rendering engines 414 with the address or location of an application described in a suitable mark-up language 416. The application mark-up may be stored, for example, in a local storage medium, or remotely, such as on a web server having a known uniform resource identifier (URI) accessible through the Internet. For example, if the application mark-up 416 is described in the SMIL mark-up language, a SMIL rendering engine is chosen (step 508). If the mark-up language 416 is described in XHTML, a suitable XHTML rendering engine is chosen.

As the chosen rendering engine 414 renders or executes the application mark-up 416, a graphical bitmap is created (510), in a video memory 413, of the graphical output of the rendering engine. As the rendering engine has been previously configured with details of the screen resolution of the mobile terminal 102, the graphical output created by the rendering engine is suitably adapted for a screen of that resolution. The generated bitmap is read from the video memory 413 by the video encoder 412 and is used to generate a video stream (step 512) that is streamed (step 518) to the mobile terminal 102.

The video stream is in a suitable format supported by the mobile terminal 102. Such formats may include, for example, H.263, H.264, MPEG-4 or any other suitable format.

Any audio generated (step 514) by the rendering engine 414 during the rendering of the application mark-up 416 is encoded (step 516) by the audio encoder 406 into a suitable audio stream format supported by mobile terminal 102 and is streamed (step 518) to the mobile terminal 102. Suitable audio formats include, for example, G.711, G.723, G.729, AMR-NB, AMR-WB, EVRC, or any other suitable format.

The user of the mobile terminal 102 interacts with the application 416 through the audio channel established as part of the video call. Audio data in the form of voice commands or DTMF commands may be sent by the user of the mobile terminal 102. The received audio commands are received by the audio decoder 408 which passes them to the control module 410. If, for example, the rendering engine is a SMIL interpreter, the DTMF commands may be passed directly to the rendering engine 414 which itself understands DTMF input. If, however, the rendering engine is a XHTML browser, the control module may perform DTMF detection or voice recognition, as appropriate, on the received audio commands, and feed the results in the form of suitable control signals to the rendering engine 414. In this way, the user of the mobile terminal 102 can interact with and control the application 416 being rendered or executed by the rendering engine 414.

As the rendering engine 414 renders the application mark-up, and as the user interacts with the application, the bitmap output generated from the rendering engine is updated in the video memory 413. When the bitmap is updated or is modified, the rendering engine 414 informs the control module 410. In turn, the control module 410 notifies the video encoder 412 that an updated bitmap has been generated in the video memory 413. The video encoder 412 reads the updated bitmap directly from the video memory 413, encodes it, and streams the encoded video data to the mobile terminal 102.

One advantage of controlling the video encoder 412 in this way is that video data is only streamed to the mobile terminal 102 when the bitmap in the video memory 413 has changed. Those skilled in the art will appreciate that although many video codecs aim to detect and to remove both temporal and spatial redundancy, in an aim to reduce the bandwidth of an encoded stream as much as possible, such processes are particularly complex and are processor and resource intensive. However, according to the present embodiments, such processor intensive tasks can be reduced significantly as no temporal and spatial redundancy detection has to be performed between frames (or bitmaps) as the video encoder 412 knows when the current frame has changed.

This is particularly advantageous when low bit-rate codecs, such as MPEG-4, are used, that do not require a continuous stream of encoded frames to be sent irrespective of whether any visual information has changed. This is particularly important when the user of the mobile terminal 102 is charged for the video call based on data bandwidth consumed rather than simply call duration.

In a further embodiment of the present invention, the systems 202 and 402 may be modified such that the video and audio streams output thereby are sent to different destinations. For example, an audio stream may be sent via a conventional telephony network to a mobile terminal, such as the mobile terminal 110, whereas the video stream may be sent to a suitable broadcast network (not shown) for broadcasting to a set-top-box associated with the user of the mobile terminal 110. In this way, a user who has a mobile terminal that is unable to make video calls can access an interactive application through a mobile terminal and can see the graphical output of the application on, for example, a television set suitably attached to the set-top-box.

It will be appreciated that the above-described embodiments provide a simple and efficient way of accessing interactive applications through a video communication such as a video call. Since many recent mobile telephones compatible with next generation networks, such as 3G networks are equipped with the necessary hardware and software for making and receiving video calls, no modification of such standard telephones is required. Furthermore, since the bandwidth required to access such applications through a video call in the manner described herein is particularly low, the cost of accessing such applications remains acceptable to users. This has benefits both to end users, network operators and application providers alike.

The term interactive application used herein relates generally to any application that provides information, visually, audible, or in any other manner, irrespective of whether the application is designed to allow interaction or control by a user. For example, an application presenting today's weather forecast may not require any interaction on behalf of a user, the information being presented automatically upon a user establishing a connection with the application. Other applications, however, may enable a user to, for example, navigate hierarchical menu structures, select information from a choice of information, etc.

Although reference herein has been made primarily to mobile terminals, those skilled in the art will appreciate that the above-described methods and system may also be suitable for accessing from other terminals, such as desktop and laptop computers, where the benefits of uniformity of rendering or control of the original content are required. It is also in general advantageous for static terminals with limits on functionality, upgradeability, performance or access rights such as set top boxes, integrated interactive televisions, dedicated user interface devices, automated home terminals etc.

It will be appreciated that embodiments of the present invention can be realised in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any claim herein and a machine readable storage storing such a program. Still further, embodiments of the present invention may be conveyed electronically via any medium such as a communication signal carried over a wired or wireless connection and embodiments suitably encompass the same.

## Claims

1. A method for providing access to an application through a user terminal, comprising:
executing an application and generating visual application output data;
creating video data from the visual application output data; and
sending the video data to the user terminal through a video channel.

2. The method of claim 1, further comprising:
writing the generated application output data to a memory; and
indicating when the contents of the memory have been modified, the steps of creating and sending video data being adapted for creating and sending video data in response to the indication.

3. The method of claim 1 or 2 , further comprising receiving user input from the user terminal through the video channel, and controlling the application using the received user input.

4. The method of any previous claim, further comprising determining characteristics of the user terminal and adapting at least some of the steps of generating visual application output data, creating video data and sending video data in accordance with those determined characteristics, wherein the characteristics include at least one of: screen size, screen resolution, support video codecs, and supported audio codecs.

5. The method of any previous claim, wherein the step of executing the application comprises retrieving a mark-up language description of application logic, and rendering that mark-up language description to provide the application.

6. The method of any previous claim, further comprising establishing a video channel by way of a video call with the user terminal.

7. The method of any previous claim, wherein the step of creating video data comprises creating video data using a compressed video codec, and wherein the step of sending the video data comprises streaming the created video data to the user terminal, the video codec being such that no video data is streamed to the user terminal if the content of the video memory has not been modified.

8. The method of any previous claim, the step of executing further comprising:
generating audio application output data;
creating audio data from the audio application output data, the audio data being in a format of the user terminal; and
sending the audio data to the user terminal through the video channel.

9. A system operable in accordance with the method of any of claims 1 to 8.

10. A method of accessing an application through a user terminal, comprising:
establishing a video channel with an application;
receiving video data from the application and displaying the video data on a display; and
selectively sending user inputs to the application through the established video channel to thereby issue control signals to the application.
